(19) Europäisches Patentamt
European Patent Office
Office européen des brevets

(11) EP 3 477 746 A1

(12) # EUROPEAN PATENT APPLICATION
published in accordance with Art. 153(4) EPC

(43) Date of publication:
**01.05.2019 Bulletin 2019/18**

(21) Application number: **17834515.3**

(22) Date of filing: **28.07.2017**

(51) Int Cl.:
***H01M 4/137*** *(2010.01)* ***H01G 11/06*** *(2013.01)*
***H01G 11/38*** *(2013.01)* ***H01G 11/48*** *(2013.01)*
***H01M 4/36*** *(2006.01)* ***H01M 4/583*** *(2010.01)*
***H01M 4/60*** *(2006.01)* ***H01M 4/62*** *(2006.01)*

(86) International application number:
**PCT/JP2017/027380**

(87) International publication number:
**WO 2018/021513 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.07.2016 JP 2016149765**
**27.07.2017 JP 2017145822**

(71) Applicant: **Nitto Denko Corporation**
**Ibaraki-shi, Osaka 567-8680 (JP)**

(72) Inventors:
- **TAKE Hiroyoshi**
  **Ibaraki-shi**
  **Osaka 567-8680 (JP)**
- **YANO Masaya**
  **Ibaraki-shi**
  **Osaka 567-8680 (JP)**
- **SUGITANI Tooru**
  **Ibaraki-shi**
  **Osaka 567-8680 (JP)**
- **GOTO Chisato**
  **Ibaraki-shi**
  **Osaka 567-8680 (JP)**
- **SHIMIZU Hisae**
  **Ibaraki-shi**
  **Osaka 567-8680 (JP)**

(74) Representative: **Hoffmann Eitle**
**Patent- und Rechtsanwälte PartmbB**
**Arabellastraße 30**
**81925 München (DE)**

(54) **POSITIVE ELECTRODE FOR POWER STORAGE DEVICE, AND POWER STORAGE DEVICE**

(57) A power storage device positive electrode having an excellent activation property from the initial charge/discharge stage, and a power storage device employing the positive electrode are provided. The power storage device positive electrode includes an active material including at least one of polyaniline and a polyaniline derivative, a conductive agent, and a binder, wherein the active material including at least one of the polyaniline and the polyaniline derivative has a polyaniline oxidant proportion of not less than 45 wt.% based on the overall weight of the polyaniline active material, wherein the binder has Hansen solubility parameters such that the sum of a polarity term and a hydrogen bonding term is not greater than 20 $MPa^{1/2}$.

FIG.1

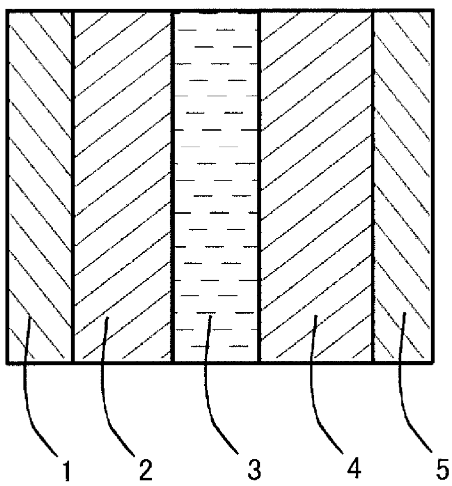


EP 3 477 746 A1

## Description

TECHNICAL FIELD

The present disclosure relates to a positive electrode for a power storage device, and to a power storage device.

BACKGROUND ART

In recent years, next-generation motor vehicles are expected to prevail for energy saving, resource saving and environmental load reduction. In such a vehicle, energy regeneration is achieved by generating electric power from energy which is otherwise lost as heat during braking, storing the electric power, and using the electric power. Exemplary storage batteries suitable for the energy regeneration include electric double-layer capacitors and lithium ion capacitors each having a fast charge capability. Such a fast charge/discharge power storage device desirably has a higher capacity.

Widely used as an electrode material for the fast charge/discharge power storage device is a capacitor carbon material such as active carbon. The active carbon and the like have a significantly great specific surface area, and physically adsorb and desorb ions onto/from surfaces thereof for the charge and discharge. This allows for very fast reaction and hence the fast charge and discharge.

However, the capacitor carbon material such as the active carbon disadvantageously has a lower capacity density because the power storage is based on a physical reaction on the particle surfaces of the carbon material. If the specific surface area is increased to increase the capacity, the capacity density per weight is increased, but the capacity density per volume is reduced. As a result, significant increase in capacity density cannot be expected.

On the other hand, an electrically conductive polymer such as polyaniline is known as an electrode material having a fast charge/discharge capability. PTL 1, for example, discloses that polyaniline having an oxidation index of not higher than 0.7 serves as a capacitor material. However, PTL 1 states that, if the polyaniline has an oxidation index of higher than 0.7, an output ratio at a room temperature is disadvantageously reduced.

The oxidation index is herein defined as a ratio A640/A340 between an absorbance A640 of maximum absorption at around 640 nm and an absorbance A340 of maximum absorption at around 340 nm in an electron spectrum of the polyaniline. The inventors analyzed the polyaniline having an oxidation index of 0.7 and, as a result, found that the polyaniline contains polyaniline oxidant in a proportion of about 40 wt.%.

Further, a method of fabricating an electric double-layer capacitor is disclosed, which employs a polyaniline/carbon composite material produced by combining a carbon material with polyaniline or a polyaniline derivative having a fast charge/discharge capability (see PTL 2). In PTL 2, however, the polyaniline plays an auxiliary role for the carbon material (active material), and has an insufficient capacity for the active material.

On the other hand, a power storage device positive electrode is proposed, which employs polyaniline containing polyaniline oxidant in a relatively high proportion (not less than 30 wt.%) as a positive electrode active material (see PTL 3) .

RELATED ART DOCUMENT

PATENT DOCUMENT

PTL 1: JP-A-2003-168436
PTL 2: JP-A-2008-160068
PTL 3: JP-A-2014-130706

SUMMARY OF INVENTION

The power storage device positive electrode having a relatively high polyaniline oxidant proportion as disclosed in PTL 3 has proper polyaniline preservability, but has a lower capacity at the initial charge/discharge stage because the polyaniline per se is less liable to be activated. Therefore, an activation step of repeating a charge/discharge cycle is required to provide the intrinsic capacity. Where the power storage device positive electrode is used for a power storage device, the power storage device is liable to suffer from capacity imbalance between the positive electrode and a negative electrode. This adversely influences the designing of the power storage device and, therefore, is industrially disadvantageous.

The present disclosure provides a power storage device positive electrode having an excellent activation property from the initial charge/discharge stage, and provides a power storage device employing the positive electrode.

The inventors conducted intensive studies to provide a power storage device excellent in fast charge/discharge

capability by utilizing polyaniline or a polyaniline derivative as an active material. Polyaniline or a polyaniline derivative containing polyaniline oxidant in a proportion of not less than 45 wt. % is excellent in polyaniline preservability and industrially advantageous, but is less liable to be activated as an active material for the power storage device positive electrode in the conventional art. However, the inventors found that, where a binder having Hansen solubility parameters such that the sum of a polarity term and a hydrogen bonding term is not greater than 20 $MPa^{1/2}$ is used in combination with a conductive agent for formation of the electrode, even a polyaniline having a higher polyaniline oxidant proportion can stably ensure a higher capacity from the initial stage of the charge/discharge cycle, and can be advantageously employed as the active material for the power storage device.

According to a first inventive aspect, there is provided a power storage device positive electrode, which includes an active material including at least one of polyaniline and a polyaniline derivative, a conductive agent, and a binder, wherein the active material including at least one of the polyaniline and the polyaniline derivative has a polyaniline oxidant proportion of not less than 45 wt. % based on the overall weight of the polyaniline active material, wherein the binder has Hansen solubility parameters such that the sum of a polarity term and a hydrogen bonding term is not greater than 20 $MPa^{1/2}$. "A polyaniline oxidant proportion of not less than 45 wt.% based on the overall weight of the polyaniline active material" herein means that the oxidation index is not less than 0.75.

According to a second inventive aspect, the binder is at least one selected from the group consisting of a rubber binder, a polyacrylate binder, and an epoxy binder in the power storage device positive electrode of the first inventive aspect.

According to a third inventive aspect, the binder is a rubber binder containing a styrene-butadiene copolymer in the power storage device positive electrode of the first or second inventive aspect.

According to a fourth inventive aspect, the power storage device positive electrode of any of the first to third inventive aspects further includes a tackifier.

According to a fifth inventive aspect, the tackifier is at least one selected from the group consisting of carboxymethylcellulose, a derivative of carboxymethylcellulose, and a salt of carboxymethylcellulose in the power storage device positive electrode of the fourth inventive aspect.

According to a sixth inventive aspect, the active material further includes a capacitor carbon material in the power storage device positive electrode of any of the first to fifth inventive aspects.

According to a seventh inventive aspect, there is provided a power storage device, which includes an electrolyte layer, and a positive electrode and a negative electrode provided on opposite sides of the electrolyte layer, wherein the positive electrode is the power storage device positive electrode of any one of the first to sixth inventive aspects.

As described above, the present disclosure provides the power storage device positive electrode, which includes the active material including at least one of the polyaniline and the polyaniline derivative, the conductive agent, and the binder, wherein the active material including at least one of the polyaniline and the polyaniline derivative has a polyaniline oxidant proportion of not less than 45 wt. % based on the overall weight of the polyaniline active material, wherein the binder has Hansen solubility parameters such that the sum of the polarity term and the hydrogen bonding term is not greater than 20 $MPa^{1/2}$. Therefore, the active material including at least one of the polyaniline and the polyaniline derivative is highly compatible with the binder, and the conductive agent properly contacts the active material. This ensures sufficient electrical conductivity, making it possible to provide a power storage device having an excellent activation property from the initial charge/discharge stage.

Where the binder is at least one selected from the group consisting of the rubber binder, the polyacrylate binder, and the epoxy binder, the power storage device positive electrode is more excellent in activation property.

Where the binder is the rubber binder containing the styrene-butadiene copolymer, the power storage device positive electrode is even more excellent in activation property.

Where the power storage device positive electrode further includes the tackifier, the viscosity of a coating slurry to be used for formation of the positive electrode can be adjusted properly for coating. Further, the compatibility between the active material and the binder is improved. Therefore, the electrode can be produced with the conductive agent and the active material properly kept in contact with each other by uniformly applying the coating slurry to a desired coating thickness.

Where the tackifier is at least one selected from the group consisting of carboxymethylcellulose, the derivative of carboxymethylcellulose, and the salt of carboxymethylcellulose, the coatability for the formation of the electrode can be improved.

Where the active material further includes a capacitor carbon material, the power storage device positive electrode has an electrochemical reactivity even in a potential range of not higher than 2.8 V with respect to the standard electrode potential of lithium (Li).

The power storage device employing the power storage device positive electrode described above is excellent in capacity activation property from the initial charge/discharge stage.

BRIEF DESCRIPTION OF DRAWINGS

FIG. 1 is a schematic sectional view showing an exemplary power storage device according to the present disclosure.
FIG. 2 shows graphs of solid state $^{13}C$-NMR spectra obtained by analyzing oxidant-form polyaniline powder and reductant-form polyaniline powder by a CP/MAS method (an upper graph is for the oxidant form, and a lower graph is for the reductant form).
FIG. 3 shows graphs (bold lines) of solid state $^{13}C$-NMR spectra obtained by analyzing polyaniline powders having different oxidation states by the CP/MAS method, and graphs (thin lines) obtained by curve fitting of data of the spectra.
FIG. 4 is a graph showing discharge curves obtained in Examples 1 and 7 and Comparative Example 6.

DESCRIPTION OF EMBODIMENTS

Embodiments of the present disclosure will hereinafter be described in detail by way of example, but not by way of limitation.
As shown in FIG. 1, a power storage device according to the present disclosure includes, for example, an electrolyte layer 3, and a positive electrode 2 and a negative electrode 4 provided in opposed relation with the electrolyte layer 3 interposed therebetween. The power storage device positive electrode (hereinafter sometimes referred to simply as "positive electrode") according to the present disclosure is used as the positive electrode 2 of the power storage device. In FIG. 1, a reference numeral 1 denotes a positive electrode current collector, and a reference numeral 5 denotes a negative electrode current collector.
The above components will hereinafter be described in turn.

<Power Storage Device Positive Electrode>

The inventive positive electrode contains an active material including at least one of polyaniline and a polyaniline derivative, a conductive agent, and a binder.

[Polyaniline (Active Material)]

According to the present disclosure, the active material includes at least one of the polyaniline and the polyaniline derivative. The polyaniline herein means a polymer obtained through electrochemical polymerization or chemical oxidation polymerization of aniline. The polyaniline derivative means a polymer obtained, for example, through electrochemical polymerization or chemical oxidation polymerization of an aniline derivative.
Examples of the aniline derivative include those having at least one substituent such as alkyl group, alkenyl group, alkoxy group, aryl group, aryloxy group, alkylaryl group, arylalkyl group or alkoxyalkyl group in a position other than the 4-position of aniline. Preferred specific examples of the aniline derivative include: o-substituted anilines such as o-methylaniline, o-ethylaniline, o-phenylaniline, o-methoxyaniline and o-ethoxyaniline; and m-substituted anilines such as m-methylaniline, m-ethylaniline, m-methoxyaniline, m-ethoxyaniline and m-phenylaniline, which may be used alone or in combination.
In the present disclosure, "aniline or the aniline derivative" will hereinafter be referred to simply as "aniline" and "at least one of polyaniline and a polyaniline derivative" will be referred to simply as "polyaniline" unless otherwise specified. Therefore, even if a polymer for an electrically conductive polymer is obtained from the polyaniline derivative, the polymer will be sometimes referred to as "polyaniline."
Particles of the polyaniline active material preferably have a particle diameter (median diameter) of 0.001 to 100 $\mu$m, particularly preferably 0.01 to 50 $\mu$m, most preferably 0.1 to 30 $\mu$m. The median diameter may be measured, for example, by a light scattering method using a particle diameter distribution measuring device of dynamic light scattering type or the like. Alternatively, the median diameter may be determined through direct measurement based on a photographed image by means of a static automatic image analyzer or the like.
The polyaniline is preferably used as a main component of the active material for the positive electrode in order to increase the capacity. Since the polyaniline has a greater capacity than the capacitor carbon material such as active carbon, addition of even a small amount of the polyaniline to the active material mainly containing the capacitor carbon material effectively increases the capacity. For example, the polyaniline is preferably present in a proportion of not less than 10 wt.%, more preferably not less than 20 wt.%, in the active material. Further, the polyaniline may be used alone as the active material for the positive electrode.
In the present disclosure, the active material contains polyaniline oxidant in a proportion of not less than 45

wt.% based on the overall weight of the polyaniline active material (or has an oxidation index of not less than 0.75). More preferably, the polyaniline oxidant proportion is not less than 50 wt.% (the oxidation index is not less than 0.8). If the polyaniline oxidant proportion based on the overall weight of the polyaniline active material is less than the aforementioned level, the preservability of the polyaniline is deteriorated. The upper limit of the polyaniline oxidant proportion based on the overall weight of the polyaniline active material is typically 100 wt.%.

The polyaniline oxidant proportion based on the overall weight of the polyaniline active material may be adjusted in the predetermined range (not less than 45 wt.%), for example, by stoichiometrically adjusting the amount of a reducing agent (e.g., phenylhydrazine) to be added to the polyaniline. Here, the reduction of the polyaniline with phenylhydrazine (an example of the reducing agent) proceeds through the following chemical reaction formula:

<Polyaniline Oxidant Proportion Measuring Method>

In the present disclosure, the proportion of the polyaniline oxidant in the polyaniline active material may be determined, for example, based on a solid state $^{13}C$-NMR spectrum. Alternatively, an oxidation index defined as a ratio A640/A340 between an absorbance A640 of maximum absorption at around 640 nm and an absorbance A340 of maximum absorption at around 340 nm in an electron spectrum obtained by means of a spectrophotometer may be determined and employed instead of the polyaniline oxidant proportion based on the overall weight of the polyaniline active material.

Measurement conditions for the solid state $^{13}C$-NMR (hereinafter referred to simply as "solid state NMR") spectrum are as follows:

[Solid State NMR Measurement]

Apparatus: AVANCE 300 available from Bruker Biospin Corporation
Nuclide to be observed: $^{13}C$
Observation frequency: 75.5 MHz
Measurement method: CP/MAS, DO/MAS
Measurement temperature: room temperature (25°C)
Chemical shift standard: glycine (176 ppm)

Exemplary solid state NMR measurement methods include a CP/MAS method and a DD/MAS method (wherein CP is Cross Polarization, MAS is Magic Angle Sample Spinning, and DD is Dipole Decoupling). The CP/MAS method requires a shorter measurement time and provides a strong peak intensity, but is not quantitative (with the detection sensitivity varying for each peak). On the other hand, the DD/MAS method provides a weak peak intensity, but is quantitative.

Solid state NMR spectra obtained by analyzing polyaniline powder in an oxidized-dedoped state and polyaniline powder in a reduced-dedoped state by the CP/MAS method are shown in FIG. 2. Chemical structural formulae for reductant-form polyaniline and oxidant-form polyaniline are partly represented by the following general formula (i):

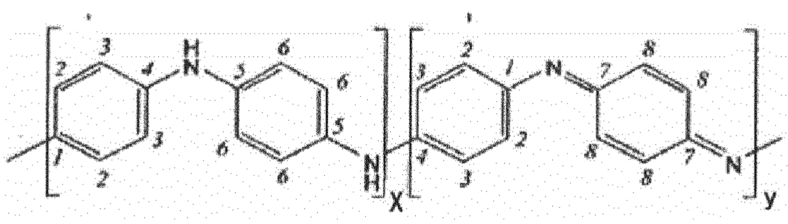

···(i)

Reductant form Oxidant form

wherein x and y are each zero or a positive number.

As shown in the above general formula (i), the oxidant-form polyaniline has a quinonediimine structure, and the reductant-form polyaniline does not have the quinonediimine structure. The solid state NMR spectra of FIG. 2 obtained by analyzing the polyaniline powders by the CP/MAS method indicate that a peak derived from the quinonediimine structure, i.e., a peak at 158 ppm, is present in the upper graph of FIG. 2, but is absent in the lower graph of FIG. 2. Thus, it is confirmed that the upper graph of FIG. 2 in which the quinonediimine structure is present corresponds to the oxidant-formpolyaniline, and the lower graph of FIG. 2 in which the quinonediimine structure is absent corresponds to

the reductant-form polyaniline.

For accurate estimation of the ratio of the oxidant form to the reductant form, polyaniline powders (1) to (6) having different oxidation states were prepared by adjusting the polyaniline oxidant proportion (for example, by adjusting the amount of an oxidizing agent or an reducing agent to be added). Solid state NMR spectra were obtained by analyzing the polyaniline powders (1) to (5) by the DD/MAS method. The solid state NMR spectra obtained by analyzing the respective polyaniline powders by the DD/MAS method and the results of curve fitting of data of the spectra are shown in FIG. 3. The curve fitting was performed by the least squares method. The result of the analysis of the polyaniline powder (6) by the CP/MAS method is shown in the graph of FIG. 2 for the reductant form.

The percentage of the area of the peak at 158 ppm with respect to the total area of peaks determined based on the result of the curve fitting for each of the polyaniline powders (1) to (5) having different oxidation states in FIG. 3, and the oxidant/reductant ratio quantitatively determined based on the area percentage are shown below in Table 1. A solid state NMR spectrum obtained by analyzing the polyaniline powder (6) by the CP/MAS method has no peak at 158 ppm and, therefore, has a peak area percentage of 0, which is also shown below in Table 1. As described above, the solid state NMR spectrum obtained by the CP/MAS method is not quantitative. Since the solid state NMR spectrum of the polyaniline powder (6) has no peak at 158 ppm, it is obvious, even without the quantitative analysis by the DD/MAS method shown in FIG. 3, that the peak area is zero.

Table 1

| | Area percentage (%) of peak at 158 ppm with respect to total area of peaks | Oxidant/reductant ratio calculated from area of peak at 158 ppm |
|---|---|---|
| (1) | 9.09 | 55/45 |
| (2) | 7.49 | 45/55 |
| (3) | 5.69 | 34/66 |
| (4) | 4.45 | 27/73 |
| (5) | 2.43 | 15/85 |
| (6) | 0 | 0/100 |

Next, about 0.5 mg of each of the polyaniline powders (1) to (6) used for the solid state NMR analysis was dissolved in 200 mL of N-methyl-2-pyrrolidone (NMP), whereby a blue solution was obtained. The solution was put in a quartz cell having an optical path length of 1 cm, and analyzed over an ultraviolet to visible range by means of a spectrophotometer to provide an electron spectrum. The resulting electron spectrum had two maximum absorptions at 340 nm and 640 nm. The ratio A640/A340 between the absorbance A640 of the maximum absorption at around 640 nm and the absorbance A340 of the maximum absorption at around 340 nm was calculated. The calculation results are shown below in Table 2.

Table 2

| | Oxidation index | Oxidant proportion (wt.%)* |
|---|---|---|
| (1) | 0.86 | 55 |
| (2) | 0.75 | 45 |
| (3) | 0.43 | 34 |
| (4) | 0.33 | 27 |
| (5) | 0.23 | 15 |
| (6) | 0 | 0 |
| * Values obtained by calculation based on solid state NMR. | | |

Table 2 indicates that, where the oxidation index is not less than 0.75, the proportion of the polyaniline oxidant contained in the polyaniline active material is not less than 45 wt.%. Similarly, where the oxidation index is not less than 0.86, the polyaniline oxidant proportion is not less than 55 wt.%.

[Capacitor Carbon Material (Active Material)]

The polyaniline active material mainly has an electrochemical reactivity in a potential range of higher than 2.8 V with respect to the standard electrode potential of lithium (Li). Where the power storage device positive electrode is required to have an electrochemical reactivity in a potential range of not higher than 2.8 V, a capacitor carbon material is preferably used as a second active material.

Examples of the capacitor carbon material include active carbon, graphene, Ketjen black, and carbon nanotube, among which active carbon is preferred because of its wide industrial availability. These may be used alone or in combination.

Specific examples of the active carbon include alkali activated carbon, steam activated carbon, gas activated carbon and zinc chloride activated carbon, which may be used alone or in combination.

The active material to be used in the present disclosure may include an electrically conductive polymer other than the polyaniline as a third active material.

Specific examples of the electrically conductive polymer other than the polyaniline and the capacitor carbon material include polyacetylene, polypyrrole, polythiophene, polyfuran, polyselenophene, polyisothianaphthene, polyphenylene sulfide, polyphenylene oxide, polyazulene, and poly(3,4-ethylenedioxythiophene), which may be used alone or in combination.

The proportion of the active material to be blended is preferably not less than 50 wt.%, more preferably not less than 60 wt.%, particularly preferably not less than 70 wt.%, based on the weight of the positive electrode material.

[Binder]

The binder contained in the positive electrode has Hansen solubility parameters such that the sum of a polarity term and a hydrogen bonding term is not greater than 20 $MPa^{1/2}$.

The Hansen solubility parameters are such that a solubility parameter introduced by Hildebrand is divided into three components, i.e., a dispersion term $\delta D$, a polarity term $\delta P$, and a hydrogen bonding term $\delta H$, which are represented in a three-dimensional space. The dispersion term $\delta D$ indicates an effect of a dispersive force, and the polarity term $\delta P$ indicates an effect of a bipolar force. The hydrogen bonding term $\delta H$ indicates an effect of a hydrogen bond force. Further, $\delta Tot$ is calculated from the following expression:

$$\delta Tot = (\delta D^2 + \delta P^2 + \delta H^2)^{1/2}$$

For the definition and the calculation of the Hansen solubility parameters, reference is made to a method described in Charles M. Hansen, Hansen Solubility Parameters: A Users Handbook (CRC Press, 2007).

Further, the Hansen solubility parameters can be calculated based on a chemical structure by using computer software Hansen Solubility Parameters in Practice (HSPiP). In the present disclosure, the Hansen solubility parameters are calculated by using HSPiP ver. 4.0.05.

The sum of the polarity term and the hydrogen bonding term of the Hansen solubility parameters of the binder (composite material) (hereinafter referred to as "Hansen solubility parameter ($\delta P + \delta H$)") is calculated by calculating the Hansen solubility parameters for the respective components of the binder, multiplying the respective Hansen solubility parameters by component ratios for the respective components, and summing up the resulting products.

The results of the calculation of the Hansen solubility parameters for typical binder components are shown below in Tables 3 and 4.

The results of the calculation of the Hansen solubility parameters for the oxidant-form polyaniline having a polyaniline oxidant proportion of 50 wt.% based on the overall weight of the polyaniline active material in the polyaniline-containing active material and for the reductant-form polyaniline having a polyaniline oxidant proportion of 0 wt.% are also shown in Table 4.

Table 3

| Material name | Structure | δD | δP | δH | δTot | δP+δH |
|---|---|---|---|---|---|---|
| Binder component | | | | | | |
| Polystyrene | 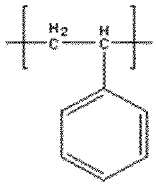 | 17.5 | 2.7 | 3.3 | 18 | 6 |
| Polybutadiene [1,4-form] | 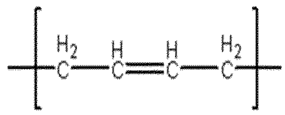 | 15.6 | 3.5 | 4.3 | 16.5 | 7.8 |
| Polybutadiene [1,2-form] | 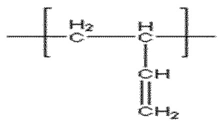 | 14.8 | 3.4 | 3.4 | 15.6 | 6.8 |
| Polymethyl methacrylate | 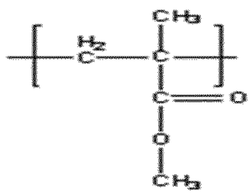 | 15.5 | 4.9 | 5.8 | 17.3 | 10.7 |
| Polybutyl methacrylate | 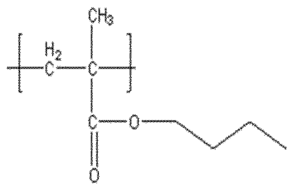 | 15.6 | 3.6 | 4.4 | 16.6 | 8 |
| Polyacrylonitrile | 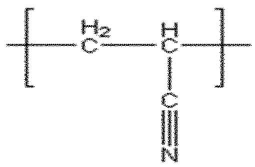 | 15.8 | 13.5 | 6.2 | 21.7 | 19.7 |
| Polyacrylic acid | 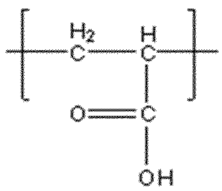 | 16 | 7.6 | 14.8 | 23.1 | 22.4 |
| Lithium polyacrylate | 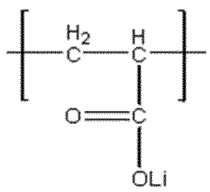 | 16 | 7.6 | 14.8 | 23.1 | 22.4 |

Table 4

| Material name | Structure | δD | δP | δH | δTot | δP+δH |
|---|---|---|---|---|---|---|
| Binder component | | | | | | |
| Polymethyl acrylate | 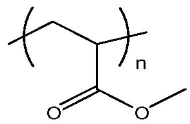 | 17.0 | 4.7 | 6.8 | 18.9 | 11.5 |
| Bisphenol-A epoxy resin | 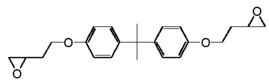 | 19.3 | 4.3 | 6.3 | 20.7 | 10.6 |
| Polyvinyl alcohol | 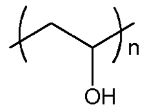 | 20.2 | 10.1 | 28.0 | 36.0 | 38.1 |
| Active material | | | | | | |
| Reductant-form polyaniline (oxidant proportion of 0 wt.%) | 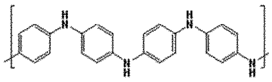 | 21.5 | 7.1 | 11.9 | 25.6 | 19 |
| Oxidant-form polyaniline (oxidant proportion of 50 wt.%) | 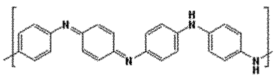 | 19.4 | 7 | 4.6 | 21.2 | 11.6 |

Based on Table 3, the Hansen solubility parameter (δP + δH) of a styrene-butadiene copolymer binder, for example, having a ratio of polystyrene : polybutadiene [1,4-form] : polybutadiene [1,2-form] = 61:31:8 is calculated from the following expression:

$$6 \times 0.61 + 7.8 \times 0.31 + 6.8 \times 0.08 = 6.622\ (MPa^{1/2})$$

In the present disclosure, the Hansen solubility parameter (δP + δH) of the binder is not greater than 20 $MPa^{1/2}$ and, for compatibility between the binder and the oxidant-form polyaniline, preferably not greater than 19 $MPa^{1/2}$, more preferably not greater than 12 $MPa^{1/2}$, most preferably not greater than 8 $MPa^{1/2}$. The lower limit of the Hansen solubility parameter (δP + δH) is typically 0 $MPa^{1/2}$.

Examples of the binder to be advantageously used in the present disclosure include: rubber binders such as styrene-butadiene copolymers, acrylonitrile-butadiene copolymers, methyl methacrylate-butadiene copolymers, and methyl methacrylate polymers, and their derivatives; polyacrylate binders including homopolymers and copolymers of acrylate monomers such as methyl acrylate, ethyl acrylate, butyl acrylate, and 2-ethylhexyl acrylate, and copolymers of any of these acrylate monomers and monomers copolymerizable therewith; and epoxy binders such as bisphenol-A epoxy resins, bisphenol-F epoxy resins, glycidyl ester epoxy resins, biphenyl epoxy resins, polyfunctional epoxy resins, and polymer epoxy resins.

Where the binder is an acrylonitrile-butadiene copolymer, the bonded acrylonitrile content is preferably not greater than 50%. The aforementioned binders may be used alone or in combination. Particularly, a rubber binder containing a styrene-butadiene copolymer is preferred because of its excellent binding property.

The binder preferably contains the styrene-butadiene copolymer as a main component thereof. Here, the term "main component" means a component that significantly influences the properties of the binder and is typically contained in a proportion of not less than 50 wt. % based on the weight of the binder. The binder may include the main component alone.

The proportion of the binder to be blended is preferably 1 to 30 wt.%, more preferably 4 to 25 wt.%, particularly preferably 4 to 18 wt.%, based on the weight of the positive electrode material.

[Conductive Agent]

Any electrically conductive material may be used as the conductive agent, as long as its properties do not vary

depending on the potential to be applied during the charge/discharge of the power storage device. Examples of the conductive agent include electrically conductive carbon materials and metal materials. Particularly, electrically conductive carbon blacks such as acetylene black and Ketjen black, and fibrous carbon materials such as carbon fibers and carbon nanotubes are preferably used. The electrically conductive carbon blacks are particularly preferred.

The proportion of the conductive agent to be blended is preferably 1 to 30 wt.%, more preferably 4 to 25 wt.%, particularly preferably 4 to 19 wt.%, based on the weight of the positive electrode material.

[Tackifier]

The material for the positive electrode essentially contains the active material, the binder, and the conductive agent. In order to produce the electrode by uniform coating with an electrode slurry, it is necessary to adjust the viscosity of the slurry suitably for a coating process. Therefore, a tackifier may be added to the material, as long as the object of the present disclosure is not impaired.

Examples of the tackifier include methyl cellulose, hydroxyethyl cellulose, polyethylene oxide, and carboxymethylcellulose, and their derivatives and salts, among which carboxymethylcellulose, and its derivatives and salts are preferably used. These tackifiers may be used alone or in combination.

The proportion of the tackifier to be blended is preferably 1 to 20 wt.%, more preferably 1 to 10 wt.%, particularly preferably 1 to 8 wt.%, based on the weight of the positive electrode material.

[Formation of Positive Electrode for Power Storage Device]

The positive electrode is formed, for example, in the following manner. The polyaniline-containing active material, the binder such as a styrene-butadiene copolymer, and the conductive agent such as electrically conductive carbon black are added to water, and sufficiently dispersed in water, whereby a paste is prepared. After the paste is applied onto a current collector, water is evaporated. Thus, a sheet electrode is provided as a composite material which includes a layer of a homogeneous mixture of the active material provided on the current collector.

The positive electrode is preferably formed in a porous sheet, which typically has a thickness of 1 to 500 μm, preferably 10 to 300 μm. The thickness of the positive electrode may be measured, for example, by means of a dial gage (available from Ozaki Manufacturing Co., Ltd.) which is a flat plate including a distal portion having a diameter of 5 mm. The measurement is performed at ten points on a surface of the electrode, and the measurement values are averaged. Where the positive electrode (porous layer) is provided on the current collector and combined with the current collector, the thickness of the resulting composite material is measured in the aforementioned manner, and the measurement values are averaged. Then, the thickness of the positive electrode is determined by subtracting the thickness of the current collector from the average thickness of the composite material.

<Negative Electrode>

The negative electrode 4 shown in FIG. 1 for use in the inventive power storage device is preferably formed by using a negative electrode active material capable of inserting and extracting a metal or ions thereinto and therefrom. Preferred examples of the negative electrode active material include metal lithium, carbon material and transition metal oxide capable of inserting and extracting lithium ions thereinto and therefrom during oxidation and reduction, silicon, and tin. These may be used alone or in combination.

Specific examples of the carbon material capable of inserting and extracting the lithium ions thereinto and therefrom include active carbon, cokes, pitch, materials produced by firing phenol resin, polyimide, cellulose and the like, artificial graphite, natural graphite, hard carbon, and soft carbon.

The carbon material capable of inserting and extracting the lithium ions thereinto and therefrom is preferably used as the main component of the negative electrode. Here, the term "main component" means a component that significantly influences the properties of the negative electrode and is typically contained in a proportion of not less than 50 wt.% based on the weight of the negative electrode. The negative electrode may be entirely made of the main component alone.

In the present disclosure, a lithium doped negative electrode produced by preliminarily doping a carbon material such as graphite, hard carbon or soft carbon with lithium ions may be used.

<Positive Electrode Current Collector and Negative Electrode Current Collector>

The positive electrode current collector 1 and the negative electrode current collector 5 shown in FIG. 1 will be described. Exemplary materials for these current collectors include metal foils and meshes such as of nickel, aluminum, stainless steel, and copper. The positive electrode current collector and the negative electrode current collector may be

formed of the same material, or may be formed of different materials. Alternatively, porous current collectors may be used as the positive electrode current collector and the negative electrode current collector.

<Electrolyte Layer>

The electrolyte layer 3 shown in FIG. 1 for use in the power storage device is formed from an electrolyte. A sheet formed by impregnating a separator with an electrolytic solution or a sheet formed of a solid electrolyte, for example, is preferably used for the electrolyte layer 3. The sheet formed of the solid electrolyte per se may double as the separator.

The electrolyte contains a solute and, as required, a solvent and additives. Preferred examples of the solute include compounds obtained by combining a metal ion such as lithium ion with a proper counter ion such as sulfonate ion, perchlorate ion, tetrafluoroborate ion, hexafluorophosphate ion, hexafluoroarsenate ion, bis(trifluoromethanesulfonyl)imide ion, bis(pentafluoroethanesulfonyl)imide ion or halide ion. Specific examples of the electrolyte include $LiCF_3SO_3$, $LiClO_4$, $LiBF_4$, $LiPF_6$, $LiAsF_6$, $LiN(SO_2CF_3)_2$, $LiN(SO_2C_2F_5)$, and LiCl.

At least one of nonaqueous solvents (organic solvent) such as carbonates, nitriles, amides, and ethers is used as the solvent. Specific examples of the organic solvents include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane, andy-butyrolactone. These solvents may be used alone or in combination. A solution obtained by dissolving the solute in the solvent will be sometimes referred to as "electrolytic solution."

The electrolytic solution may contain additives as required. Examples of the additives include vinylene carbonate and fluoroethylene carbonate.

<Separator>

In the present disclosure, the separator may be used in a variety of forms. The separator may be an insulative porous sheet that is capable of preventing an electric short circuit between the positive electrode and the negative electrode disposed in opposed relation with the separator interposed therebetween, and has electrochemical stability, higher ion permeability, and certain mechanical strength. Exemplary preferred materials for the separator include paper, nonwoven fabric, and porous films formed of polypropylene, polyethylene, polyimide and other resins, which may be used alone or in combination.

<Power Storage Device>

As shown in FIG. 1, for example, the power storage device includes the electrolyte layer 3, and the positive electrode 2 and the negative electrode 4 disposed on the opposite sides of the electrolyte layer 3.

The power storage device may be produced, for example, in the following manner with the use of the aforementioned ingredients. The positive electrode and the negative electrode are stacked with the separator disposed therebetween to thereby provide a stack. The stack is placed in a battery container such as an aluminum laminate package, which is in turn dried in vacuum. Then, an electrolytic solution is injected into the battery container dried in vacuum, and the package (battery container) is sealed. Thus, the power storage device is produced. The battery production process including the injection of the electrolytic solution into the package is performed in an inert gas atmosphere such as an ultrapure argon gas atmosphere in a glove box. The battery production process may be performed in a lower humidity room.

Besides the aluminum laminate package, the power storage device may have any of various shapes such as a film shape, a sheet shape, a square shape, a cylindrical shape, and a button shape.

EXAMPLES

Next, the present disclosure will be described by way of examples, but not limited to these examples.

[Example 1]

<Preparation of Active material>

(Preparation of Electrically Conductive Polyaniline Powder containing Tetrafluoroboric Acid as Dopant)

Powder of electrically conductive polyaniline (electrically conductive polymer) containing tetrafluoroboric acid as a dopant was prepared in the following manner. That is, 84.0 g (0.402 mol) of an aqueous solution containing

tetrafluoroboric acid (special grade reagent, available from Wako Pure Chemical Industries, Ltd.) at a concentration of 42 wt.% was added to a 300-mL volume glass beaker containing 138 g of ion-exchanged water, and 10.0 g (0.107 mol) of aniline was added to the resulting aqueous solution with stirring by a magnetic stirrer. Immediately after the addition of aniline to the tetrafluoroboric acid aqueous solution, aniline was dispersed in an oily droplet form in the tetrafluoroboric acid aqueous solution, but thereafter dissolved in the aqueous solution in several minutes. Thus, a homogeneous transparent aniline aqueous solution was provided. The aniline aqueous solution thus provided was cooled to -4°C or lower with the use of a refrigerant bath.

Next, 11.63 g (0.134 mol) of powdery manganese dioxide (Grade-1 reagent, available from Wako Pure Chemical Industries, Ltd.) was added as an oxidizing agent little by little to the aniline aqueous solution, while the mixture in the beaker was kept at a temperature of not higher than -1°C. Immediately after the oxidizing agent was thus added to the aniline aqueous solution, the aniline aqueous solution turned blackish green. Thereafter, the resulting aniline aqueous solution was continuously stirred for a while, whereby generation of a blackish green solid began.

After the oxidizing agent was added in 80 minutes in this manner, the resulting reaction mixture containing the reaction product thus generated was further stirred for 100 minutes while being cooled. Thereafter, the resulting solid was suction-filtered with No. 2 filter paper with the use of a Buchner funnel and a suction bell jar. Thus, powder was provided. The powder was washed in an aqueous solution of an about 2 mol/L tetrafluoroboric acid with stirring by the magnetic stirrer. Then, the powder was washed in acetone several times with stirring, and suction-filtered. The resulting powder was dried in vacuum at a room temperature (25°C) for 10 hours. Thus, 12.5 g of electrically conductive polyaniline containing tetrafluoroboric acid as the dopant (hereinafter referred to simply as "electrically conductive polyaniline") was provided. The electrically conductive polyaniline was bright green powder.

<Preparation of Polyaniline Powder in Oxidized-Dedoped State>

The electrically conductive polyaniline powder provided in the doped state in the aforementioned manner was put in a 2 mol/L sodium hydroxide aqueous solution, which was in turn stirred in a 3-L separable flask for 30 minutes. Thus, the electrically conductive polyaniline powder was dedoped with the tetrafluoroboric acid dopant through a neutralization reaction. The dedoped polyaniline was washed with water until the filtrate became neutral. Then, the dedoped polyaniline was washed in acetone with stirring, and suction-filtered through No. 2 filter paper with the use of a Buchner funnel and a suction bell jar. Thus, dedoped polyaniline powder was provided on the No. 2 filter paper. The resulting powder was dried in vacuum at a room temperature (25°C) for 10 hours, whereby brown polyaniline powder was provided in an oxidized-dedoped state.

The oxidation index of the polyaniline powder was determined by the aforementioned method. As a result, the oxidation index was 0.86. The polyaniline powder had a polyaniline oxidant proportion of 55 wt. % based on the overall weight of the polyaniline, which was determined based on the solid state NMR spectrum.

<Preparation of Slurry>

Next, 2.6 g (76.5 parts by weight) of the polyaniline powder (having an oxidant proportion of 55 wt.%) produced in an oxidized-dedoped state in the aforementioned manner, 0.29 g (8.5 parts by weight) of electrically conductive carbon black powder (DENKA BLACK available from Denki Kagaku Kogyo K.K.) as a conductive agent, 0.408 g (12 parts by weight) of styrene-butadiene copolymer having a copolymerization ratio of styrene : butadiene [1,4-form] : butadiene [1,2-form] = 61:31:8 as a binder, 5.19 g (3 parts by weight) of sodium carboxymethylcellulose diluted to 2 wt.%, and 7.72 g of water were mixed together to a solid concentration of 21 wt.%. The mixture was stirred at 2000 rpm for 10 minutes by means of a planetary centrifugal vacuum mixer (THINKY MIXER ARV-310 available from THINKY Co., Ltd.) and defoamed for 3 minutes.

<Production of Power Storage Device Positive Electrode>

The above slurry was applied at a coating rate of 10 mm/second onto an aluminum foil (30CB available from Hohsen Corporation) with the use of a desktop automatic coater (available from Tester Sangyo Co., Ltd.) while the coating thickness was adjusted to 360 μm by a doctor blade applicator equipped with a micrometer. Then, the resulting coating was allowed to stand at a room temperature (25°C) for 45 minutes, and dried on a hot plate at a temperature of 100°C. Thus, a positive electrode was produced. The positive electrode had a thickness of 62 μm excluding the thickness of the current collector layer (aluminum foil).

<Production of Power Storage Device>

A power storage device was assembled in the following manner by using the above positive electrode and a

separator of a nonwoven fabric (TF40-50 available from Nippon Kodoshi Corporation and having a thickness of 50 μm and a porosity of 70 %). The positive electrode and the separator were dried in vacuum at 150°C for 2 hours by means of a vacuum drier before being assembled into a cell. Metal lithium (available from Honjo Metal Co., Ltd. and having a thickness of 50 μm) was used as a negative electrode, and an ethylene carbonate/dimethyl carbonate solution (having a volume ratio of 1:2) containing lithium hexafluorophosphate ($LiPF_6$) at a concentration of 2 mol/$dm^3$ (available from Kishida Co., Ltd.) was used as an electrolytic solution. The assembling of the power storage device (the lithium secondary battery) was carried out in a glove box (having a dew point of -70°C) in an ultrapure argon gas atmosphere.

[Example 2]

A power storage device of Example 2 was produced in substantially the same manner as in Example 1, except that the slurry was prepared by mixing 3 g (79.3 parts by weight) of the polyaniline powder (having an oxidant proportion of 55 wt.%) in an oxidized-dedoped state, 0.213 g (5.6 parts by weight) of electrically conductive carbon black powder (DENKA BLACK available from Denki Kagaku Kogyo K.K.) as the conductive agent, 0.456 g (12.1 parts by weight) of styrene-butadiene copolymer having a copolymerization ratio of styrene : butadiene [1,4-form] : butadiene [1,2-form] = 61:31:8 as the binder, 5.67 g (3 parts by weight) of sodium carboxymethylcellulose diluted to 2 wt.%, and 8.66 g of water to a solid concentration of 21 wt.%, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 76 μm excluding the thickness of the current collector layer.

[Example 3]

A power storage device of Example 3 was produced in substantially the same manner as in Example 1, except that the slurry was prepared by mixing 2.6 g (76.5 parts by weight) of the polyaniline powder (having an oxidant proportion of 55 wt.%) in an oxidized-dedoped state, 0.29g (8.5 parts by weight) of electrically conductive carbon black powder (DENKA BLACK available from Denki Kagaku Kogyo K.K.) as the conductive agent, 0.408 g (12 parts by weight) of polymethyl acrylate (AS2000 available from Toagosei Co., Ltd.) as the binder, 5.19 g (3 parts by weight) of sodium carboxymethylcellulose diluted to 2 wt.%, and 7.72 g of water to a solid concentration of 21 wt.%, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 50 μm excluding the thickness of the current collector layer.

[Example 4]

A power storage device of Example 4 was produced in substantially the same manner as in Example 1, except that the slurry was prepared by mixing 3 g (79.3 parts by weight) of the polyaniline powder (having an oxidant proportion of 55 wt.%) in an oxidized-dedoped state, 0.213 g (5.6 parts by weight) of electrically conductive carbon black powder (DENKA BLACK available from Denki Kagaku Kogyo K.K.) as the conductive agent, 0.456 g (12.1 parts by weight) of polymethyl acrylate (AS2000 available from Toagosei Co., Ltd.) as the binder, 5.67 g (3 parts by weight) of sodium carboxymethylcellulose diluted to 2 wt.%, and 8.66 g of water to a solid concentration of 21 wt.%, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 50 μm excluding the thickness of the current collector layer.

[Example 5]

A power storage device of Example 5 was produced in substantially the same manner as in Example 1, except that the slurry was prepared by mixing 2.6 g (76.5 parts by weight) of the polyaniline powder (having an oxidant proportion of 55 wt.%) in an oxidized-dedoped state, 0.29g (8.5 parts by weight) of electrically conductive carbon black powder (DENKA BLACK available from Denki Kagaku Kogyo K.K.) as the conductive agent, 0.408 g (12 parts by weight) of bisphenol-A epoxy resin (0444 available from Chukyo Yushi Co., Ltd.) as the binder, 5.19 g (3 parts by weight) of sodium carboxymethylcellulose diluted to 2 wt.%, and 7.72 g of water to a solid concentration of 21 wt.%, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 65 μm excluding the thickness of the current collector layer.

[Example 6]

A power storage device of Example 6 was produced in substantially the same manner as in Example 1, except that the slurry was prepared by mixing 3 g (79.3 parts by weight) of the polyaniline powder (having an oxidant proportion of 55 wt.%) in an oxidized-dedoped state, 0.213 g (5.6 parts by weight) of electrically conductive carbon black powder (DENKA BLACK available from Denki Kagaku Kogyo K.K.) as the conductive agent, 0.456 g (12.1 parts by weight) of bisphenol-A epoxy resin (0444 available from Chukyo Yushi Co., Ltd.) as the binder, 5.67 g (3 parts by weight) of sodium carboxymethylcellulose diluted to 2 wt. %, and 8.66 g of water to a solid concentration of 21 wt.%, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 65 μm excluding the thickness of the current collector layer.

[Comparative Example 1]

A power storage device of Comparative Example 1 was produced in substantially the same manner as in Example 1, except that the slurry was prepared by mixing 2.6 g (79.2 parts by weight) of the polyaniline powder (having an oxidant proportion of 55 wt.%) in an oxidized-dedoped state, 0.29 g (8.8 parts by weight) of electrically conductive carbon black powder (DENKA BLACK available from Denki Kagaku Kogyo K.K.) as the conductive agent, 5.25 g (12 parts by weight on a solid basis) of a polyacrylic acid solution prepared by diluting polyacrylic acid having a molecular weight of 800,000 with water to 7.5 wt.% as the binder, and 7.49 g of water to a solid concentration of 21 wt.%, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 100 μm excluding the thickness of the current collector layer.

[Comparative Example 2]

A power storage device of Comparative Example 2 was produced in substantially the same manner as in Example 1, except that the slurry was prepared by mixing 3 g (82.2 parts by weight) of the polyaniline powder (having an oxidant proportion of 55 wt.%) in an oxidized-dedoped state, 0.213 g (5.8 parts by weight) of electrically conductive carbon black powder (DENKA BLACK available from Denki Kagaku Kogyo K.K.) as the conductive agent, 5.84 g (12 parts by weight on a solid basis) of a polyacrylic acid solution prepared by diluting polyacrylic acid having a molecular weight of 800,000 with water to 7.5 wt.% as the binder, and 8.33 g of water to a solid concentration of 21 wt.%, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 111 μm excluding the thickness of the current collector layer.

[Comparative Example 3]

A power storage device of Comparative Example 3 was produced in substantially the same manner as in Example 1, except that the slurry was prepared by mixing 2.6 g (79.2 parts by weight) of the polyaniline powder (having an oxidant proportion of 55 wt.%) in an oxidized-dedoped state, 0.29 g (8.8 parts by weight) of electrically conductive carbon black powder (DENKA BLACK available from Denki Kagaku Kogyo K.K.) as the conductive agent, 3.28 g (12 parts by weight on a solid basis) of a lithium polyacrylate solution prepared by adding polyacrylic acid having a molecular weight of 800,000 and lithium hydroxide to water to a lithiation ratio of 100 % and diluting the resulting mixture to 12 wt.% as the binder, and 9.46 g of water to a solid concentration of 21 wt.%. The positive electrode layer had a thickness of 94 μm excluding the thickness of the current collector layer.

[Comparative Example 4]

A power storage device of Comparative Example 4 was produced in substantially the same manner as in Example 1, except that the slurry was prepared by mixing 2.6 g (76.5 parts by weight) of the polyaniline powder (having an oxidant proportion of 55 wt.%) in an oxidized-dedoped state, 0.29 g (8.5 parts by weight) of electrically conductive carbon black powder (DENKA BLACK available from Denki Kagaku Kogyo K.K.) as the conductive agent, 5.25 g (12 parts by weight on a solid basis) of a polyvinyl alcohol solution prepared by diluting polyvinyl alcohol (PVA EG40 available from Nippon Synthetic Chemical Industry Co., Ltd.) with water to 7.5 wt.% as the binder, and 7.49 g of water to a solid concentration of 21 wt. %, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 50 μm excluding the thickness of the current collector layer.

[Comparative Example 5]

A power storage device of Comparative Example 5 was produced in substantially the same manner as in Example 1, except that the slurry was prepared by mixing 3 g (82.2 parts by weight) of the polyaniline powder (having an oxidant proportion of 55 wt.%) in an oxidized-dedoped state, 0.213 g (5.8 parts by weight) of electrically conductive carbon black powder (DENKA BLACK available from Denki Kagaku Kogyo K.K.) as the conductive agent, 5.84 g (12 parts by weight on a solid basis) of a polyvinyl alcohol solution prepared by diluting polyvinyl alcohol (PVA EG40 available from Nippon Synthetic Chemical Industry Co., Ltd.) with water to 7.5 wt.% as the binder, and 8.33 g of water to a solid concentration of 21 wt. %, stirring the resulting mixture at 2000 rpm for 10 minutes by means of a planetary centrifugal vacuum mixer (THINKY MIXER ARV-310 available from THINKY Co., Ltd.) and defoaming the mixture for 3 minutes. The positive electrode layer had a thickness of 50 μm excluding the thickness of the current collector layer.

Evaluation and measurement were performed for the following items on Examples 1 to 6 and Comparative Examples 1 to 5 based on the following criteria. The results are shown below in Table 5.

<<Weight Capacity Density, Capacity Exhibiting Percentage, and Discharge Capacity Density per Unit Volume of Positive Electrode Layer of Electrode>>

The weight capacity density of each of the power storage devices was measured in a constant current and constant voltage charging/constant current discharging mode in a 25°C environment by means of a battery charge/discharge device (TOSCAT available from Toyo System Co., Ltd.). Assuming that the ideal weight capacity density of the polyaniline is 120 mAh/g in this charge/discharge range, a total capacity (mAh) was calculated based on the amount of the polyaniline contained in the positive electrode of each of the power storage devices. Then, the electric current level was set so that the total capacity could be charged and discharged in 20 hours. The upper limit of the charge voltage was set to 3.8 V. After the voltage reached 3.8 V in the constant current charging, the constant voltage charging was performed at 3.8 V until the electric current level reached 20% of an electric current level observed during the constant current charging. Then, the constant voltage charging was finished, and a capacity observed at this time was defined as a charging capacity. Thereafter, the constant current discharging was performed to a discharge termination voltage of 2.2 V, and a discharge capacity observed at this time was defined as a weight discharge capacity density (mAh/g) at the first cycle. This weight discharge capacity density is based on the net weight of the polyaniline as the active material. The capacity exhibiting percentage was defined as the ratio of the weight capacity density observed at the first discharge cycle to 120 mAh/g. Further, a discharge capacity density (mAh/$cm^3$) per unit volume of the positive electrode layer of the electrode was determined based on the discharge capacity and the thickness and the area of the positive electrode layer of each of the power storage devices.

Table 5

| | Example 1 | Example 2 | Example 3 | Example 4 | Example 5 | Example 6 |
|---|---|---|---|---|---|---|
| Active material | Oxidant-form polyaniline | Oxidant-form polyaniline | Oxidant-form polyaniline | Oxidant-form polyaniline | Oxidant-form polyaniline | Oxidant-form polyaniline |
| Main component of binder | Styrene-butadiene copolymer | Styrene-butadiene copolymer | Polymethyl acrylate | Polymethyl acrylate | Bisphenol-A epoxy resin | Bisphenol-A epoxy resin |
| Hansen solubility parameter of binder ($\delta P + \delta H$) ($MPa^{1/2}$) | 6.6 | 6.6 | 11.5 | 11.5 | 10.6 | 10.6 |
| Amount (part by weight) of conductive agent based on 100 parts by weight of polyaniline | 11.2 | 7.1 | 11.2 | 7.1 | 11.2 | 7.1 |
| Weight discharge capacity density (mAh/g) at first cycle | 114 | 111 | 96 | 25 | 102 | 73 |
| Capacity exhibiting percentage (%) | 95 | 93 | 80 | 21 | 85 | 61 |
| Discharge capacity density (mAh/$cm^3$) per volume of positive electrode layer of electrode | 31.7 | 30.3 | 29.9 | 10.0 | 27.1 | 20.0 |

Table 5 (continued)

| | Comparative Example 1 | Comparative Example 2 | Comparative Example 3 | Comparative Example 4 | Comparative Example 5 |
|---|---|---|---|---|---|
| Active material | Oxidant-form polyaniline | Oxidant-form polyaniline | Oxidant-form polyaniline | Oxidant-form polyaniline | Oxidant-form polyaniline |
| Main component of binder | Polyacrylic acid | Polyacrylic acid | Li polyacrylate | Polyvinyl alcohol | Polyvinyl alcohol |
| Hansen solubility parameter of binder ($\delta P + \delta H$) ($MPa^{1/2}$) | 22.4 | 22.4 | 22.4 | 34.7 | 34.7 |
| Amount (part by weight) of conductive agent based on 100 parts by weight of polyaniline | 11.2 | 7.1 | 11.2 | 11.2 | 7.1 |
| Weight discharge capacity density (mAh/g) at first cycle | 106 | 3.4 | 59 | 66 | 0.07 |
| Capacity exhibiting percentage (%) | 88 | 3 | 49 | 55 | 0.06 |
| Discharge capacity density ($mAh/cm^3$) per volume of positive electrode layer of electrode | 25.0 | 2.1 | 16.0 | 20.3 | 0.02 |

The results shown in Table 5 indicate that the intrinsic capacity of the polyaniline was exhibited at the first discharge cycle in the power storage devices of Examples 1 to 6 in which the polyaniline was contained as the active material and had a polyaniline oxidant proportion of not less than 45 wt.% based on the overall weight of the polyaniline active material, and the binder had a Hansen solubility parameter ($\delta P + \delta H$) of not greater than 20 $MPa^{1/2}$. In Comparative Examples 1 to 5 in which the Hansen solubility parameter ($\delta P + \delta H$) of the binder was greater than 20 $MPa^{1/2}$, in contrast, the intrinsic capacity was not sufficiently exhibited at the first cycle. In Examples 2, 4 and 6, the capacity of the polyaniline was sufficiently exhibited at the first cycle, although the amount of the conductive agent was reduced to 7.1 parts by weight from 11.2 parts by weight based on the amount of the polyaniline. In Comparative Examples 2 and 5 in which the amount of the conductive agent was reduced to 7.1 parts by weight from 11.2 parts by weight based on the amount of the polyaniline, the capacity of the polyaniline was hardly exhibited.

In general, the power storage device is preferably capable of exhibiting the capacity with the use of a minimum amount of the conductive agent. Since the capacity of the power storage device depends on the volume, the volume density of the active material is increased by minimizing the total amount of the additives such as the conductive agent. Therefore, a power storage device containing a minimum amount of additives has a higher capacity and more excellent properties than a power storage device containing a greater amount of additives if these power storage devices have the same volume.

As shown in Table 5, the power storage devices including the power storage device positive electrodes each had a higher capacity exhibiting percentage, even if the conductive agent is contained in a greater amount as in Examples 1, 3, and 5, or in a smaller amount as in Examples 2, 4, and 6. In contrast, the power storage devices of Comparative Examples 2 and 5 in which the conductive agent was contained in a smaller amount each had a lower capacity exhibiting percentage. The difference in capacity exhibiting percentage is attributable to the fact that the binder has a Hansen solubility parameter ($\delta P + \delta H$) of not greater than 20 $MPa^{1/2}$.

Though not clarified in detail, this is supposedly because, in comparison between the Hansen solubility parameters ($\delta P + \delta H$) of the reductant-form polyaniline and the oxidant-form polyaniline, the oxidant-form polyaniline has a lower Hansen solubility parameter ($\delta P + \delta H$), and a binder having a lower Hansen solubility parameter ($\delta P + \delta H$) is highly compatible with the oxidant-form polyaniline to exhibit a higher binding capability with the conductive agent and the polyaniline active material. Therefore, the oxidant-form polyaniline is more likely to be activated at the first cycle to exhibit its intrinsic capacity. The positive electrodes of Examples 1 to 6 each had a higher discharge capacity density per unit volume and, therefore, had excellent electrode properties.

[Example 7]

A power storage device of Example 7 was produced in substantially the same manner as in Example 1, except that the slurry was prepared by mixing 0.6 g (17 parts by weight) of the polyaniline powder (having an oxidant proportion of 55 wt.%) in an oxidized-dedoped state, 2.4 g (70 parts by weight) of steam activated carbon, 0.139 g (4 parts by weight) of electrically conductive carbon black powder (DENKA BLACK available from Denki Kagaku Kogyo K.K.) as the conductive agent, 0.207 g (6 parts by weight) of styrene-butadiene copolymer having a copolymerization ratio of polystyrene : polybutadiene [1,4-form] : polybutadiene [1,2-form] = 61:31:8 as the binder, 5.17 g (3 parts by weight) of sodium carboxymethylcellulose diluted to 2 wt.%, and 1.33 g of water to a solid concentration of 35 wt.%. The positive electrode layer had a thickness of 102 μm excluding the thickness of the current collector layer.

[Comparative Example 6]

A power storage device of Comparative Example 6 was produced in substantially the same manner as in Example 1, except that the slurry was prepared by mixing 5 g (87 parts by weight) of alkali activated carbon, 0.232 g (4 parts by weight) of electrically conductive carbon black powder (DENKA BLACK available from Denki Kagaku Kogyo K.K.) as the conductive agent, 0.346 g (6 parts by weight) of styrene-butadiene copolymer having a copolymerization ratio of polystyrene : polybutadiene [1,4-form] : polybutadiene [1,2-form] = 61:31:8 as the binder, 8.62 g (3 parts by weight) of sodium carboxymethylcellulose diluted to 2 wt.%, and 3.76 g of water to a solid concentration of 32 wt.%. The positive electrode layer had a thickness of 115 μm excluding the thickness of the current collector layer.

Evaluation and measurement were performed for the following items on Example 7 and Comparative Example 6 based on the following criteria. The results are shown below in Table 6.

<<Weight Capacity Density, and Discharge Capacity Density per Unit Volume of Positive Electrode Layer of Electrode>>

The weight capacity density of each of the power storage devices of Example 7 and Comparative Example 6 was measured in a constant current and constant voltage charging/constant current discharging mode in a 25°C environment by means of a battery charge/discharge device (TOSCAT available from Toyo System Co., Ltd.). Assuming that the standard capacity per unit weight of the active material is 60 mAh/g, a total capacity (mAh) was calculated based on the amount of the active material contained in the positive electrode of each of the power storage devices. Then, the electric current level was set so that the total capacity could be charged and discharged in 20 hours. The upper limit of the charge voltage was set to 3.8 V. After the voltage reached 3.8 V in the constant current charging, the constant voltage charging was performed at 3.8V until the electric current level reached 20% of an electric current level observed during the constant current charging. Then, the constant voltage charging was finished, and a capacity observed at this time was defined as a charging capacity. Thereafter, the constant current discharging was performed to a discharge termination voltage of 2.2 V, and a discharge capacity observed at this time was defined as a weight discharge capacity density (mAh/g) at the first cycle. This weight discharge capacity density was based on the net weight of the alkali activated carbon as the active material in Comparative Example 6, and was based on the total weight of the steam activated carbon and the oxidant-form polyaniline as the active material in Example 7. Further, a discharge capacity density (mAh/$cm^3$) per unit volume of the positive electrode layer of the electrode was determined based on the discharge capacity and the thickness and the area of the positive electrode layer of each of the power storage devices. The values thus determined are shown in Table 6. Discharge curves obtained in Examples 1 and 7 and Comparative Example 6 are shown in FIG. 4.

Table 6

| | Example 7 | Comparative Example 6 |
|---|---|---|
| Active material | Oxidant-form polyaniline : steam activated carbon = 2:8 (weight ratio) | Alkali activated carbon |
| Binder | Styrene-butadiene copolymer | Styrene-butadiene copolymer |
| Hansen solubility parameter of binder (δP + δH) ($MPa^{1/2}$) | 6.6 | 6.6 |
| Amount (part by weight) of conductive agent based on 100 parts by weight of active material | 4.6 | 4.6 |
| Weight discharge capacity density (mAh/g) at first cycle | 66 | 60 |
| Discharge capacity density (mAh/$cm^3$) per volume of positive electrode layer of electrode | 30.6 | 24.3 |

In general, the steam activated carbon has a lower capacity density per unit weight than the alkali activated carbon. In Example 7 in which the polyaniline active material having a polyaniline oxidant proportion of not less than 45 wt.% based on the weight of the polyaniline active material was mixed with the steam activated carbon having a lower capacity, the discharge capacity per unit weight of the overall active material is comparable to that in Comparative Example 6 which employed the alkali activated carbon because of the significantly great discharge capacity per unit

weight of the oxidant-form polyaniline active material. The electrode of Example 7 had a higher discharge capacity density per unit volume and, therefore, had excellent electrode properties.

Further, FIG. 4 indicates that the power storage device of Example 1 which employed the oxidant-form polyaniline alone as the active material had a lower capacity in a potential range of not higher than 2.8 V with respect to the standard electrode potential of lithium (Li), while the power storage device of Example 7 which employed the oxidant-form polyaniline and the active carbon as the active material had a sufficient electrochemical reactivity in a potential range of not higher than 2.8 V with respect to the standard electrode potential of lithium (Li). Therefore, these power storage devices can be advantageously used according to design specifications thereof.

While specific forms of the embodiments of the present disclosure have been shown in the aforementioned inventive examples, the inventive examples are merely illustrative of the disclosure but not limitative of the disclosure. It is contemplated that various modifications apparent to those skilled in the art could be made within the scope of the disclosure.

The inventive power storage device positive electrode can be advantageously used as a positive electrode for a power storage device such as a lithium ion capacitor or a lithium ion secondary battery. The inventive power storage device can be used in the same application field as the conventional power storage elements. The inventive power storage device can be widely used, for example, for mobile electronic devices such as mobile PCs, mobile phones, and personal digital assistants, as a driving power supply for hybrid electric vehicles, electric vehicles, fuel cell vehicles, and the like, and as a battery for momentary power failure.

REFERENCE SIGNS LIST

1: POSITIVE ELECTRODE CURRENT COLLECTOR
2: POSITIVE ELECTRODE
3: ELECTROLYTE LAYER
4: NEGATIVE ELECTRODE
5: NEGATIVE ELECTRODE CURRENT COLLECTOR

**Claims**

**1.** A power storage device positive electrode comprising:

a polyaniline active material including at least one of polyaniline and a polyaniline derivative;
a conductive agent; and
a binder;
wherein the polyaniline active material has a polyaniline oxidant proportion of not less than 45 wt. % based on an overall weight of the polyaniline active material; and
wherein the binder has Hansen solubility parameters such that a sum of a polarity term and a hydrogen bonding term is not greater than 20 $MPa^{1/2}$.

**2.** The power storage device positive electrode according to claim 1, wherein the binder is at least one selected from the group consisting of a rubber binder, a polyacrylate binder, and an epoxy binder.

**3.** The power storage device positive electrode according to claim 1 or 2, wherein the binder is a rubber binder containing a styrene-butadiene copolymer.

**4.** The power storage device positive electrode according to any one of claims 1 to 3, further comprising a tackifier.

**5.** The power storage device positive electrode according to claim 4, wherein the tackifier is at least one selected from the group consisting of carboxymethylcellulose, a derivative of carboxymethylcellulose, and a salt of carboxymethylcellulose.

**6.** The power storage device positive electrode according to any one of claims 1 to 5, wherein the active material further comprises a capacitor carbon material.

**7.** A power storage device comprising:

an electrolyte layer; and
a positive electrode and a negative electrode provided on opposite sides of the electrolyte layer;
wherein the positive electrode is the power storage device positive electrode according to any one of claims 1 to 6.

FIG.1

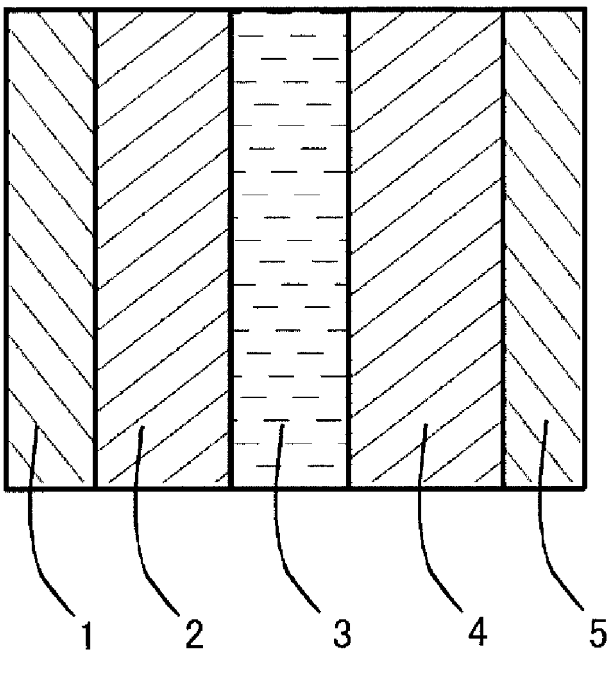

FIG.2

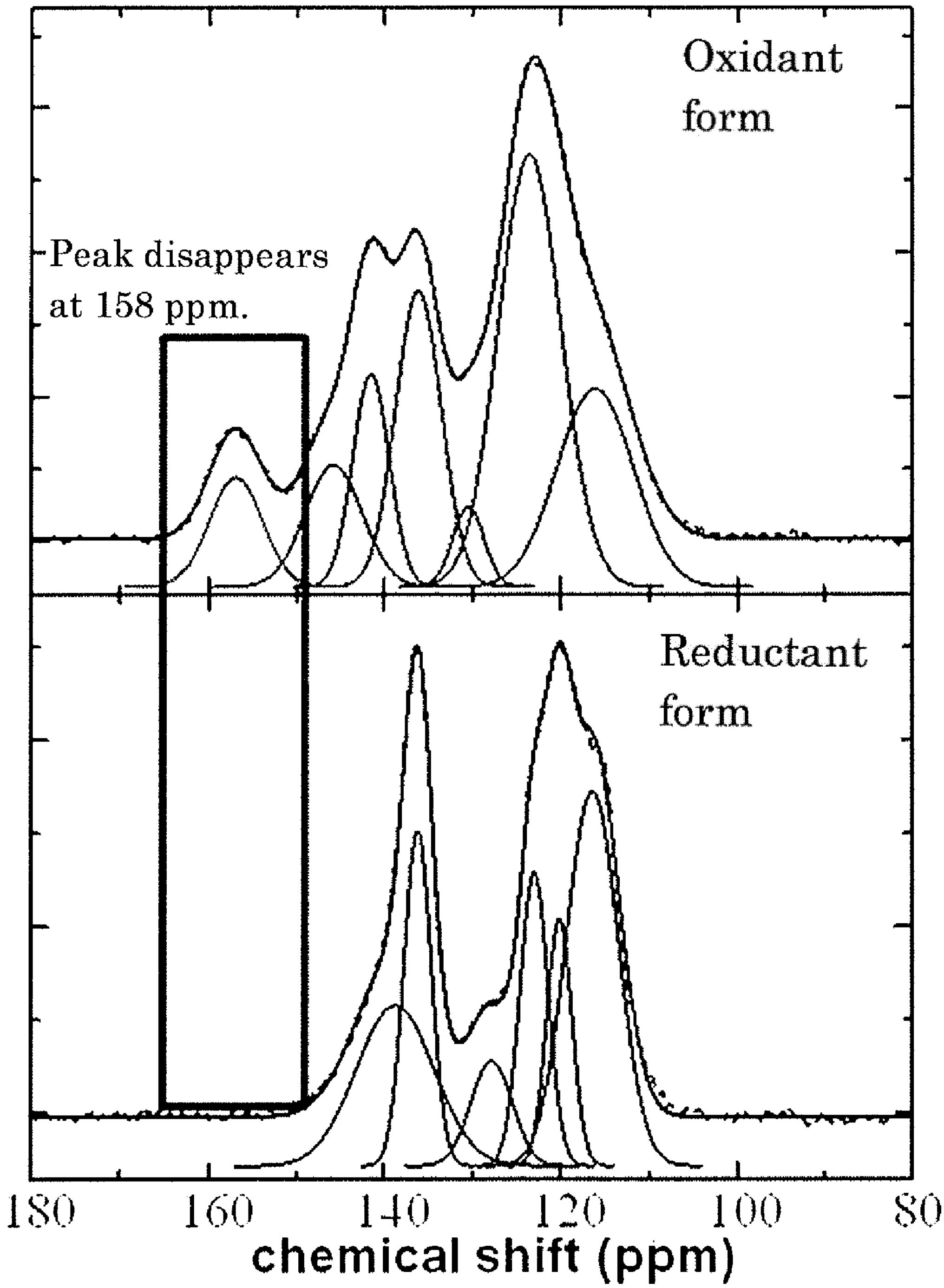
Oxidant form
Reductant form
Peak disappears at 158 ppm.
180
160
140
120
100
80
chemical shift (ppm)

FIG.3

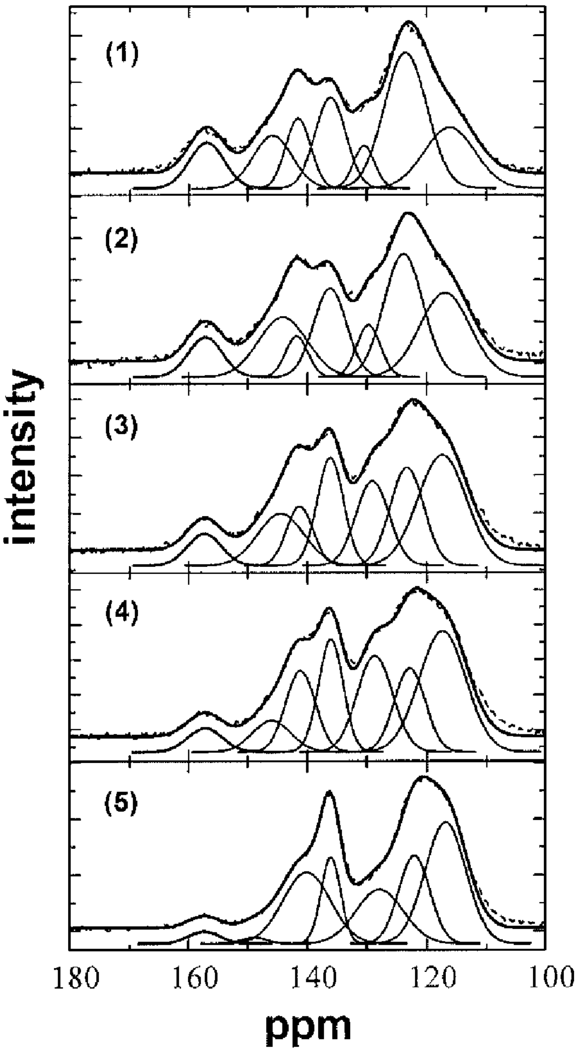

FIG.4

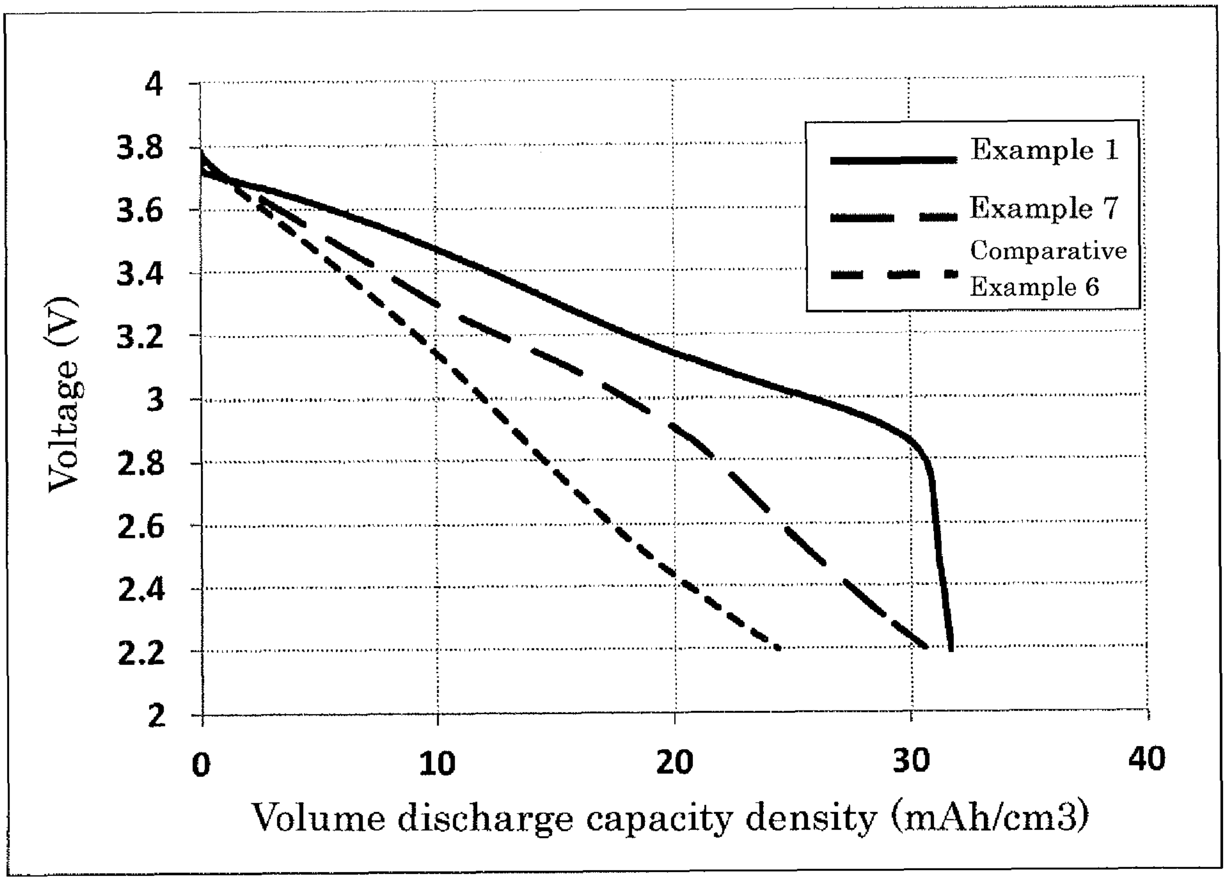
Example 1
Example 7
Comparative Example 6
Voltage (V)
4
3.8
3.6
3.4
3.2
3
2.8
2.6
2.4
2.2
2
0
10
20
30
40
Volume discharge capacity density (mAh/cm3)

## INTERNATIONAL SEARCH REPORT

International application No. PCT/JP2017/027380

**A. CLASSIFICATION OF SUBJECT MATTER**

*H01M4/137*(2010.01)i, *H01G11/06*(2013.01)i, *H01G11/38*(2013.01)i, *H01G11/48*(2013.01)i, *H01M4/36*(2006.01)i, *H01M4/583*(2010.01)i, *H01M4/60*(2006.01)i, *H01M4/62*(2006.01)i

According to International Patent Classification (IPC) or to both national classification and IPC

**B. FIELDS SEARCHED**

Minimum documentation searched (classification system followed by classification symbols)

H01M4/137, H01G11/06, H01G11/38, H01G11/48, H01M4/36, H01M4/583, H01M4/60, H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 63-250069 A (Showa Denko Kabushiki Kaisha), 17 October 1988 (17.10.1988), page 2, upper right column, line 12 to page 4, upper left column, line 5; page 4, lower left column, line 10 to the last line; page 5, upper left column, line 10 to upper right column, line 16<br>& US 4803138 A<br>column 2, line 25 to column 5, line 56; column 6, lines 28 to 40; column 7, line 54 to column 8, line 20<br>& EP 282068 A2 & CN 88101323 A | 1,6,7<br>2-5 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 16 October 2017 (16.10.17) | 24 October 2017 (24.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | <br><br>Telephone No. |

Form PCT/ISA/210 (second sheet) (January 2015)

INTERNATIONAL SEARCH REPORT

International application No.
PCT/JP2017/027380

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-115724 A (Matsushita Electric Industrial Co., Ltd.), 07 May 1996 (07.05.1996), paragraph [0009] (Family: none) | 1-7 |
| A | WO 2013/002415 A1 (Nitto Denko Corp.), 03 January 2013 (03.01.2013), table 3 & US 2014/0220438 A1 table 3 & EP 2728659 A1 & CN 103765657 A & KR 10-2014-0039244 A | 1-7 |
| A | JP 62-264561 A (Showa Denko Kabushiki Kaisha), 17 November 1987 (17.11.1987), examples (Family: none) | 1-7 |
| A | JP 11-126610 A (NEC Corp.), 11 May 1999 (11.05.1999), example 1 & EP 911893 A1 example 1 | 1-7 |
| A | JP 2-295064 A (Ricoh Co., Ltd.), 05 December 1990 (05.12.1990), page 2, lower left column, line 8 to page 3, lower right column, the last line (Family: none) | 1-7 |
| E,A | JP 2017-173056 A (Toyota Central Research and Development Laboratories, Inc.), 28 September 2017 (28.09.2017), paragraphs [0029] to [0030] (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003168436 A
- JP 2008160068 A
- JP 2014130706 A

### Non-patent literature cited in the description

- **CHARLES M. HANSEN.** Hansen Solubility Parameters: A Users Handbook. CRC Press, 2007